# EUROPEAN PATENT SPECIFICATION

(11) **EP 2 048 798 B1**
(45) Date of publication and mention of the grant of the patent: **17.09.2014**
(21) Application number: 07745339.7
(22) Date of filing: 15.06.2007
(51) Int. Cl.: H04W 48/16, H04W 52/02

(54) **BASE STATION SEARCH METHOD BY MEANS OF RADIO TERMINAL AND RADIO TERMINAL**
BASISSTATIONS-SUCHVERFAHREN MITTELS FUNKENDGERÄT UND FUNKENDGERÄT
TERMINAL RADIO ET PROCÉDÉ DE RECHERCHE DE STATION DE BASE PAR VOIE DE TERMINAL RADIO

(30) Priority: 14.07.2006 JP 2006194231
(43) Date of publication of application: 15.04.2009
(73) Proprietor: NEC Corporation, Minato-ku Tokyo 108-8001 (JP)
(72) Inventor: ITOH, Masashi, Tokyo 108-8001 (JP)
(74) Representative: Stork Bamberger
(86) International application number: PCT/JP2007/062084
(87) International publication number: WO 2008/007512

(56) References cited:
- EP-A1- 1 610 507
- EP-A2- 0 833 538
- JP-A- 09 070 070
- JP-A- 2003 249 890
- JP-A- 2004 040 425
- JP-A- 2004 235 713
- JP-A- 2004 356 684
- JP-A- 2006 128 779
- US-A- 5 794 146
- US-A1- 2004 120 278
- MATSUDA T.: 'Kotei . Keitai no Yugo ni Sonaeyo! NGN Jidai no Kigyo Network Sekkei Giho' NETWORK WORLD vol. 11, no. 4, 2006, pages 78 - 79, XP003020406

## Description

### Technical Field

The present invention relates to technology with which a radio terminal such as a portable radio telephone searches for a base station or an access point (AP) of a wireless LAN.

In the present specification, the generic term "base station search" is used to refer to an operation in which a radio terminal searches for a base station or a wireless LAN AP.

The present invention refers to a base station search method with the features according to the preamble of claim 1.

Furthermore, the present invention refers to a radio terminal with the features of the preamble of claim 7.

### Background Art

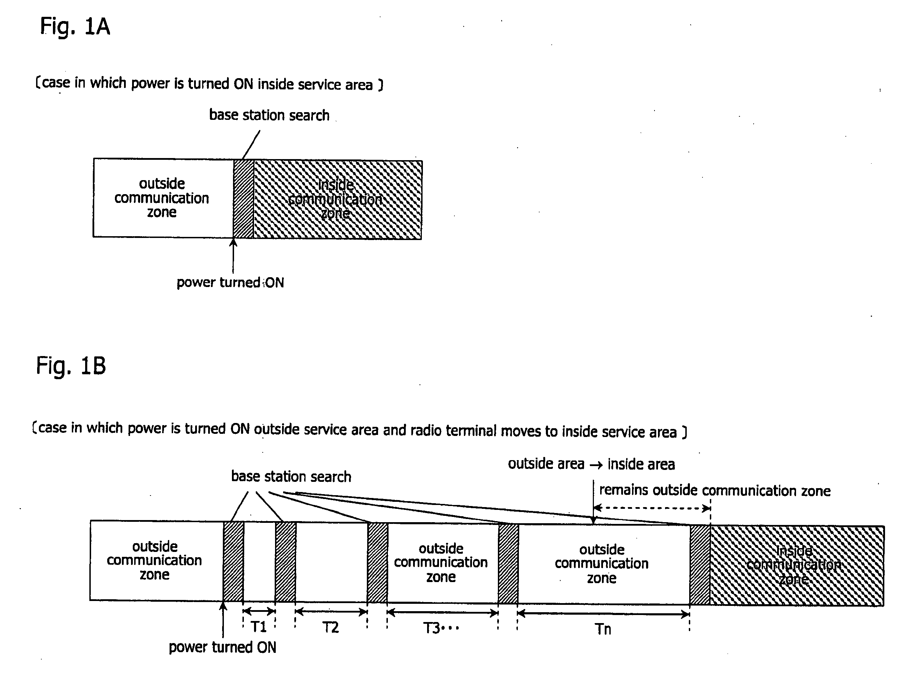

When the power of a radio terminal such as a portable radio telephone that performs communication by securing synchronization with a base station is turned on, the radio terminal executes a base station search to perform location registration. Figure 1A and Figure 1B illustrate an example of a related base station search by a radio terminal as viewed on a time axis.

When the power of the radio terminal is turned on when the radio terminal is within a service area, as shown in Figure 1A, although the radio terminal is outside a communication zone immediately after the power is turned on, since the radio terminal immediately executes a base station search, the radio terminal can switch to a state in which it is within a communication zone. In contrast, in a case in which the power of a radio terminal is turned on when the radio terminal is outside a service area and thereafter the radio terminal moves to a location inside a service area, as shown in Figure 1B, even though the radio terminal executes a base station search immediately after the power is turned on, the search fails because the radio terminal is outside the communication zone. Therefore, after waiting for an interval of T1 by means of timer control, the radio terminal executes a base station search again.

In this case, in order that the radio terminal does not execute a base station search unnecessarily in a state in which it is outside a communication zone and thereby exhaust the battery, when the base station search has failed, the radio terminal executes an out-of-zone power saving base station search control that extends the base station search interval sequentially in the order T2, T3, ..., Tn by timer control. Thus, when a radio terminal is outside a service area for a long time, it is common to attempt to save power by extending the interval of a base station search as much as possible. Consequently, for example, even when a radio terminal has moved from a location outside a service area to a location inside a service area during a period Tn to which the interval of a base station search has been extended, because the radio terminal does not execute a base station search until the timer for Tn expires, the radio terminal remains in a state in which it is outside a communication zone. Accordingly, there is the problem in which, regardless of the fact that the radio terminal has moved to a location inside a service area, radio communication cannot be performed until the timer for Tn expires.

As means for solving this problem, for example, Patent Document 1 proposes technology relating to portable radio telephones. According to this technology, during a period in which a portable radio telephone is outside a communication zone (while synchronization is failing), the portable radio telephone gradually extends the interval during which synchronization with a radio base station is performed, and, also reduces the frequency of synchronization attempts in order to eliminate wasteful efforts, and when the frequency of synchronization attempts is at the lowest level, the portable radio telephone notifies the operator to the effect. Further, when the portable radio telephone detects an input from the operator at an input device managed by a terminal controller, the portable radio telephone immediately executes synchronization processing. It is therefore possible to reduce power consumption that accompanies synchronization attempts by the portable radio telephone and also to reduce the number of occasions at which synchronization be performed even when the cycle of synchronization operations has lengthened.

Recently, accompanying the emergence of the FMC (Fixed Mobile Convergence) market, the demand for dual terminals that can utilize both a portable telephone network and a fixed telephone network is increasing. The common method to connect to a fixed telephone network is by utilizing a wireless LAN. However, since a wireless LAN comprises a large number of APs in a small cells/multiple channels structure, there is the problem in which a base station search (in this case, an AP search) takes time and the power consumption load is larger than for a portable telephone network.

Therefore, although it is common to attempt to save power by extending the interval of a base station search as much as possible when a radio terminal is outside a service area for a long time, there is the problem in which when the radio terminal has returned to a location inside a service area the fixed telephone network cannot be used immediately. Generally, since call charges for a fixed telephone network are less than call charges for a portable telephone network and since the communication quality of the fixed telephone network is higher, users are liable to complain particularly in cases in which the users cannot utilize the fixed telephone network even when located inside a fixed telephone network service area.

Patent Document 2 proposes technology relating to a mobile communication terminal that includes a function for connecting to a mobile communication network and a wireless LAN. According to this technology, a mobile communication terminal includes an RFID (Radio Frequency Identification) tag, and normally the mobile communication terminal is set to a connection standby state that uses minimum power in which the mobile communication terminal is on standby to connect only to a mobile communication network and a function for enabling standby to connect to a wireless LAN or the like that uses a large amount of standby power is turned off (connection to a wireless LAN is disabled). When the RFID tag receives radio waves that are transmitted from an RFID reader within a specific area, the mobile communication terminal releases the connection standby state that uses the minimum power by means of a voltage generated utilizing the electromotive force of the radio waves and shifts to a connection standby state that uses normal power. Thus, the mobile communication terminal shifts to a standby state in which connection is also possible to a wireless LAN via a radio communication device installed inside a service area or in the vicinity of the service area. Accordingly, the mobile communication terminal makes it possible to effectively carry out communication utilizing a wireless LAN while minimizing connection standby time under normal power that has a large standby power requirement.

However, there are the following problems, respectively, with the invention described in Patent Document 1 and the invention described in Patent Document 2.

According to the invention described in Patent Document 1, during a period in which a portable radio telephone is outside a communication zone (while synchronization is failing), the portable radio telephone gradually extends an interval for performing synchronization with a radio base station, and along with reducing the frequency of synchronization attempts by eliminating wasteful synchronization attempts the portable radio telephone immediately executes synchronization processing upon detecting an input from the operator into an input device that is managed by a terminal controller. Thus, along with decreasing the power consumption accompanying synchronization attempts by the portable radio telephone, it is possible to reduce the occasions at which synchronization cannot be performed even when the cycle of synchronization operations has lengthened. However, in the invention described in Patent Document 1, because synchronization processing is executed immediately each time that there is an input from the operator, if the operator repeatedly performs input operations when located outside a communication zone, since synchronization processing is executed each time, there is the risk that power will be wastefully consumed.

Further, according to the invention described in Patent Document 2, when an RFID tag of a dual terminal that can utilize both a portable telephone network and a fixed telephone network utilizing a wireless LAN receives radio waves that are transmitted from an RFID reader within a specific area, the dual terminal releases a connection standby state (state in which connection to a wireless LAN is disabled) that uses the minimum power by utilizing the radio waves and shifts to a connection standby state (standby state in which connection is also enabled to a wireless LAN) that uses normal power. Thus, the dual terminal makes it possible to effectively utilize communication by a wireless LAN while minimizing connection standby time, that has a large standby power requirement, by using normal power. However, with the invention described in Patent Document 2 also, when RFID communication is performed at frequent intervals it means that base station searches are performed unnecessarily, and there is thus the risk that the battery of the dual terminal will be wastefully consumed.
Patent Document 1: Japanese patent Laid-Open No. 2004-040425
Patent Document 2: Japanese patent Laid-Open No. 2004-235713

Document EP 1 610 507 A1 discloses a variable scan rate for WLAN connections. When an automatic homing operation is performed in which a scanning operation is repeated for searching an access point as a connection destination, the wireless LAN terminal apparatus does leave a scan pause time period unchanged which is a period of time between the previous scanning operation to the next scanning operation, but lengthens it as the number of scanning operation increases.

Document US 5 794 146 shows a system and a method for conserving battery power in a mobile station searching to select a serving cell. According to document US 5 794 146 the interval between scans by a mobile station for the beacon signals of cells in a communication system is varied in order to save battery power. The interval between scans in response to the time elapsed since the start of the search is increased.

Document US 2004/0120278 A1 discloses a method for scanning by wireless computing devices of access points, wherein the scanning period is extended with time to save power. The scanning period is reset to a default period if a triggering event is detected, for example when the device looses association with its currently associated network.

### Disclosure of the Invention

In view of the above described problems, an object of the present invention is, with respect to out-of-zone power saving base station search control of a radio terminal, to provide novel means that can combine both a power-saving effect and a prompt return to a communication zone by suppressing base station searches, that are prompted by a device operation or by RFID communication, to a required minimum.

A base station search method by means of a radio terminal according to the present invention is characterised by the features of the characterising portion of claim 1.

A radio terminal according to the present invention is characterised by the features of the characterising portion of claim 7.

### Brief Description of the Drawings

Figure 1A is a view that illustrates an example in which a base station search operation of a related radio terminal is viewed on a time axis;
Figure 1B is a view that illustrates an example in which a base station search operation of a related radio terminal is viewed on a time axis;
Figure 2 is a block diagram showing a schematic configuration of a radio terminal according to an exemplary embodiment;
Figure 3A is a view that illustrates an example in which a base station search operation of a radio terminal according to the exemplary embodiment is viewed on a time axis;
Figure 3B is a view that illustrates an example in which a base station search operation of a radio terminal according to the exemplary embodiment is viewed on a time axis;
Figure 4 is a view that illustrates a schematic configuration of a wireless LAN system in which the radio terminal of the present invention is applied as a dual terminal that can connect to a portable telephone network and a wireless LAN; and
Figure 5 is a view that illustrates a schematic configuration of a wireless LAN system in which the radio terminal of the present invention is applied as a dual terminal that can connect to a portable telephone network and a wireless LAN.

### Best Mode for Carrying Out the Invention

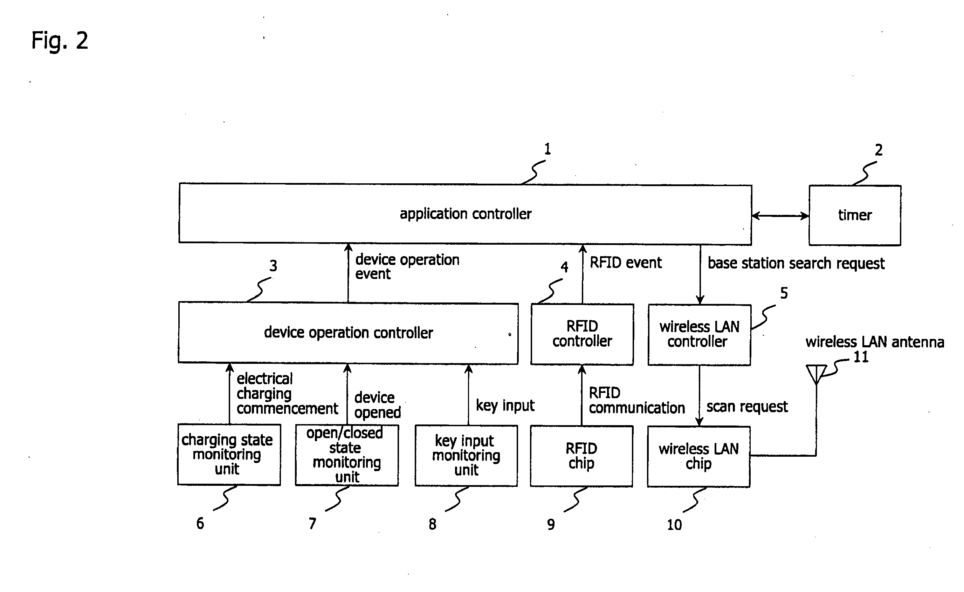

Figure 2 is a block diagram showing a schematic configuration of a radio terminal according to an exemplary embodiment that shows a configuration in a case in which a radio terminal of the present invention is applied as a wireless LAN terminal.

The radio terminal of the present exemplary embodiment includes application controller 1, timer 2, device operation controller 3, RFID controller 4, wireless LAN controller 5, charging state monitoring unit 6, open/closed state monitoring unit 7, key input monitoring unit 8, RFID chip 9, wireless LAN chip 10, and wireless LAN antenna 11.

In this configuration, wireless LAN controller 5, charging state monitoring unit 6, open/closed state monitoring unit 7, key input monitoring unit 8, and RFID chip 9 are an example of a detection unit. Further, wireless LAN chip 10 is an example of a base station search execution unit.

According to the present exemplary embodiment, application controller 1 controls wireless LAN controller 5 to perform control for carrying out a base station search (in this case, a search for an AP of a wireless LAN) using wireless LAN antenna 11 and wireless LAN chip 10. At that time, in order not to wastefully execute base station searches and consume the battery when the radio terminal is outside a communication zone, by using timer 2, application controller 1 performs out-of-zone power saving base station search control that sequentially extends the interval of a base station search when a base station search fails.

Charging state monitoring unit 6 monitors a connection and a charging voltage of a battery charger, and when charging has started, charging state monitoring unit 6 notifies device operation controller 3 that an "electrical charging commencement" operation has been detected. When the radio terminal is a folding-type terminal, open/closed state monitoring unit 7 monitors an open/closed state of the radio terminal, and when the radio terminal is opened, open/closed state monitoring unit 7 notifies device operation controller 3 that a "device opening" operation has been detected. The key input monitoring unit 8 monitors key operations and key inputs. When a key operation or a key input occurs, key input monitoring unit 8 notifies device operation controller 3 that a "key input" operation has been detected.

When device operation controller 3 receives an "electrical charging commencement", a "device opening", or a "key input" notification, device operation controller 3 notifies application controller 1 that a device operation event has occurred. When RFID communication is performed, RFID chip 9 notifies RFID controller 4 that "RFID communication" has been detected. Upon receiving an "RFID communication" notification, RFID controller 4 notifies application controller 1 that an RFID event has occurred.

When application controller 1 receives a notification of a device operation event from device operation controller 3 or an RFID event from RFID controller 4, application controller 1 resets the time measurement by timer 2, immediately sends a base station search request to wireless LAN controller 5, and resumes a base station search from the initial interval. At that time, when a notification of a device operation event from device operation controller 3 or a notification of an RFID event from RFID controller 4 is received again during the period in which a fixed time period (guard time) elapses after resetting the time measurement is reset by timer 2, application controller 1 ignores that notified event and continues the base station search.

Upon receiving a base station search request from application controller 1, wireless LAN controller 5 sends a scan request notification to wireless LAN chip 10. When wireless LAN chip 10 receives the scan request from wireless LAN controller 5, wireless LAN chip 10 executes a base station search, and when communication with a base station (in this case an AP of a wireless LAN) is established, wireless LAN chip 10 ends the base station search and performs an operation to return the wireless terminal inside a communication zone. Thus, according to the present exemplary embodiment, even in a state in which a base station search interval Tn is extended by out-of-zone power saving base station search control, since a base station search is executed again from the initial T1 interval when a device operation or RFID communication is detected, the wireless terminal can quickly return inside a communication zone.

Further, according to the present exemplary embodiment, the guard time is set so that once a base station search that is prompted by a device operation or RFID communication is executed, for a fixed time period thereafter, a base station search that is prompted by a device operation or RFID communication is not executed. Thus, wasteful power consumption due to timer 2 being reset each time a device operation or RFID communication is performed so that the base station search is started from the initial interval T1, is suppressed.

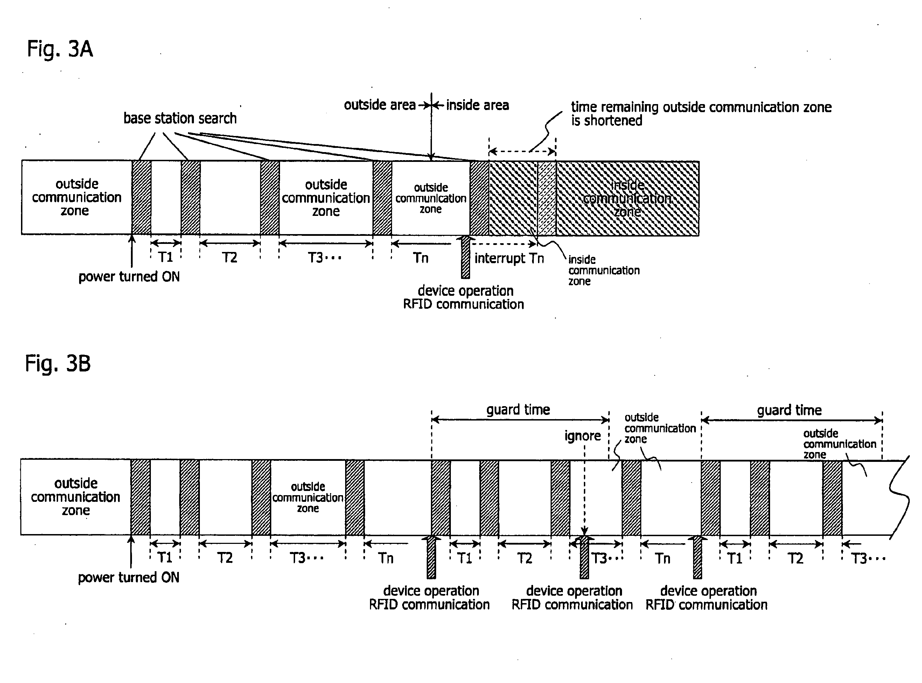

Figure 3A and Figure 3B are views that illustrate an example in which a base station search operation of a radio terminal according to the present exemplary embodiment is viewed on a time axis.

In the present exemplary embodiment also, when the power of a radio terminal is turned on when it is outside a service area and the radio terminal then moves inside a service area, the base station search interval is sequentially extended in the manner T1, T2, T3, ..., Tn by the out-of-zone power saving base station search control. According to the present exemplary embodiment, in a case in which a device is operated by the user or in which RFID communication is performed when the radio terminal is executing a base station search, once the device operation or the RFID communication occurs the timer for Tn is interrupted and a base station search is executed, and further, the radio terminal resets timer 2 and again starts out-of-zone power saving base station search control that sequentially extends the base station search interval in the manner T1, T2, T3, ..., Tn by timer control.

Accordingly, as shown in Figure 3A, in a case in which a device is operated or in which RFID communication is performed in a state in which the radio terminal has moved to inside a service area from outside a service area during a base station search, since a timer for Tn is interrupted and a base station search is executed due to the device operation device being operated or due to RFID communication being performed, the radio terminal can quickly return inside a communication zone and a time in which radio communication cannot be performed can be shortened.

However, when a device is operated or when RFID communication is performed frequently when outside a service area, if timer 2 is reset each time and a base station search from the initial interval T1 is repeated by timer control, it will result in base station searches being performed unnecessarily, and there thus is a concern that the battery of the radio terminal will be expended. Therefore, as shown in Figure 3B, the radio terminal sets a guard timer to a fixed time period by timer processing so that even if a device is operated or RFID communication is performed during that period, the radio terminal does not reset timer 2 and sequentially sets the timer intervals after the base station search interval Tn has been executed at that time point and continues the base station search.

When the radio terminal is still located outside a service area after the guard time elapses and a device is operated or RFID communication is performed again, the radio terminal once again interrupts the timer for Tn and executes a base station search due to the device being operated or due to the RFID communication being performed, and also resets timer 2 and again starts, from the initial interval, a base station search in which the intervals are sequentially extended in the manner T1, T2, T3, ..., Tn.

An implementation of this method can be considered in which a time set by timer 2 is, for example, gradually increased for the times T1, T2, T3, ... in the manner of 4 seconds, 8 seconds, 12 seconds, .... If the guard time is too short, a base station search will be repeated frequently and a large amount of power will be consumed, while conversely, if the guard time is too long, a case may arise in which it takes an excessive amount of time for the radio terminal to return to a communication zone. Thus a guard time of around one minute is considered suitable. For example, in a case in which the user repeats a predetermined device operation within one minute, the radio terminal does not reset timer 2 and continues the base station search that has been carried out until then. In this regard, each of these setting times can be appropriately changed according to the respective case.

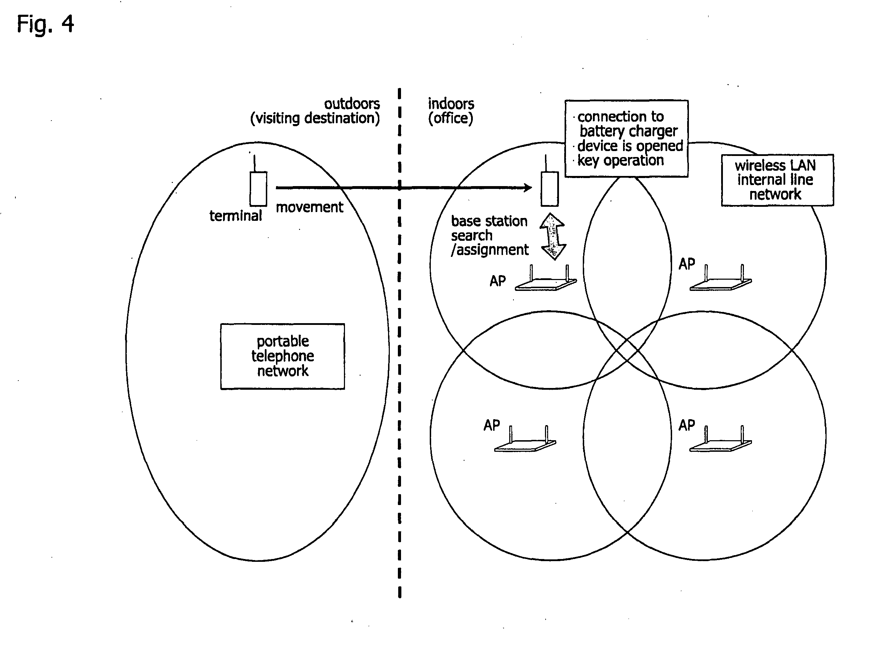

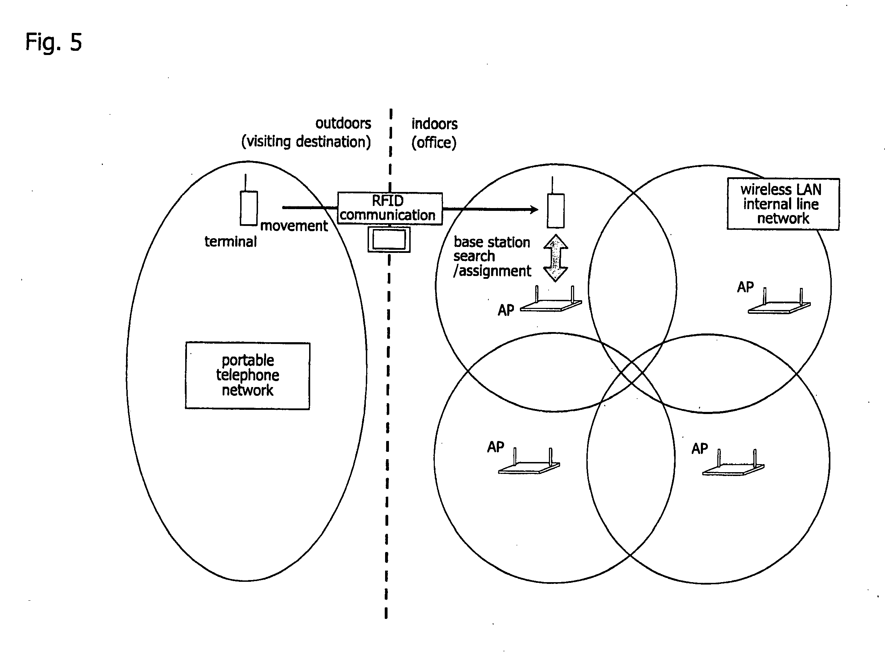

Figure 4 and Figure 5 illustrate the configuration of a wireless LAN system to which the radio terminal of the present invention is applied. In Figure 4 and Figure 5, the radio terminal is configured as a dual terminal that can perform communication by connecting to a portable telephone network when in an outdoor environment and by connecting to a wireless LAN internal line network (fixed telephone network) composed of a plurality of APs when in an indoor environment.

In Figure 4, a case is supposed in which, when the radio terminal moves from an outdoor environment to an indoor environment, the radio terminal is located inside a service area of a wireless LAN internal line network and can thus perform wireless LAN communication by executing a base station search and by being assigned to an AP. Further, in Figure 5, a case is considered in which the radio terminal carries out security authorization when moving from an outdoor environment to an indoor environment by performing RFID communication when entering an office by utilizing a non-contact IC card such as Felica (registered trademark) that is built into the radio terminal. Next, the operations of the radio terminal shown in Figure 4 and Figure 5 are described.

In the case illustrated in Figure 4, the radio terminal periodically performs a base station search for a wireless LAN internal line network when also in an outdoor environment also. At this time, the radio terminal sequentially extends the interval of a base station search in the manner T1, T2, T3, ..., Tn as shown in Figure 3A and Figure 3B. Thus, when the radio terminal is in an outdoor environment for a long time, the radio terminal executes base station searches at the interval Tn. When the radio terminal moves from the outdoor environment to an indoor environment, if the user performs no action, the radio terminal executes a base station search after the next time Tn elapses. However, in the present exemplary embodiment, in a case in which the user connects the radio terminal to a battery charger on a desk located indoors, opens the radio terminal to check the state of the device, or performs a key operation, the radio terminal is prompted by that action to execute a base station search and thus communication by wireless LAN is enabled.

In the case shown in Figure 5, when the radio terminal is in an outdoor environment, it periodically performs a base station search for a wireless LAN internal line network, similarly to the case shown in Figure 4. However, when the radio terminal has moved from the outdoor environment to an indoor environment, when security authorization by RFID communication utilizing a non-contact IC card such as Felica (registered trademark) is carried out when entering an office, the radio terminal takes this security authorization as a prompt to execute a base station search, and thus communication by wireless LAN is enabled.

Thus, according to the present exemplary embodiment, for example, when a radio terminal that has a wireless LAN communication function moves from an outdoor environment to an indoor environment, the radio terminal can start a base station search that is prompted by a device operation or RFID communication. Therefore, wireless LAN communication is enabled in which the time for returning to a communication zone when moving from outdoors to indoors is minimized while maintaining a power-saving effect.

Moreover, the radio terminal according to the present exemplary embodiment has a function whereby, when a base station search that is prompted by a device operation or RFID communication, is executed, a predetermined time is set to elapse (guard time) after the base station search, and even if a device is again operated or if RFID communication is again executed before that time elapses, the operation of the device or RFID communication will be ignored as a prompt for a base station search. Therefore, in a case in which operation of a device or RFID communication is repeated many times, the radio terminal will not reset timer 2 and start a base station search from the initial interval each time, and thus wasteful power consumption can be prevented.

Thus, according to the present exemplary embodiment, it is possible to perform wireless LAN communication that minimizes the time during which a radio terminal will return to a communication zone when moving into an indoor environment while maintaining a power-saving effect, and wasteful power consumption can also be suppressed.

Although in the present exemplary embodiment the radio terminal is described as a dual terminal that can perform communication by connecting to a portable telephone network and a wireless LAN internal line network, the present invention is not limited thereto and can also be applied as a radio terminal that is exclusively used as a portable telephone or a radio terminal that is exclusively used with a wireless LAN.

Further, although according to the present exemplary embodiment operation of a device or RFID communication serves as a prompt for a base station search, a configuration can also be adopted in which execution of a wireless LAN base station search is prompted by a status change such as wireless LAN controller 5 detecting a deterioration in the reception strength of an electric field of a portable telephone network as the result of the radio terminal moving to an indoor environment.

## Claims

1. A base station search method by means of a radio terminal that includes an out-of-zone power saving base station search control function that, by setting a timer (2), sequentially extends an interval of a base station search during which the radio terminal returns to a communication zone after moving outside a communication zone from an initial interval,
**characterized in that**
during execution of the base station search, when a predetermined change of state is detected in the radio terminal, the timer (2) is reset, the interval of the base station search is returned to the initial interval, and the base station search is resumed; and
when the predetermined change of state is detected again before a predetermined time elapses from the time of resetting the timer (2) due to detecting the predetermined change of state, the base station search is continued without resetting the timer (2).

2. The base station search method according to claim 1, wherein:
the radio terminal is a dual terminal that is capable of connecting to a portable telephone network and also of connecting to a fixed telephone network by utilizing a wireless LAN;
the base station search is a search for an access point of the wireless LAN; and
the detection of the predetermined change of state is detection of a key input operation of the radio terminal.

3. The base station search method according to claim 1, wherein:
the radio terminal is a dual terminal that is capable of connecting to a portable telephone network and also of connecting to a fixed telephone network by utilizing a wireless LAN;
the base station search is a search for an access point of the wireless LAN; and
the detection of the predetermined change of state is detection of an electrical charging commencement operation of the radio terminal.

4. The base station search method according to claim 1, wherein:
the radio terminal is a dual terminal that is capable of connecting to a portable telephone network and also of connecting to a fixed telephone network by utilizing a wireless LAN, and is a folding-type that can open and close;
the base station search is a search for an access point of the wireless LAN; and
the detection of the predetermined change of state is detection of an operation that opens the radio terminal.

5. The base station search method according to claim 1, wherein:
the radio terminal is a dual terminal that is capable of connecting to a portable telephone network and also of connecting to a fixed telephone network by utilizing a wireless LAN, and comprises an RFID chip (9);
the base station search is a search for an access point of the wireless LAN; and
the detection of the predetermined change of state is detection of RFID communication performed by the RFID chip (9).

6. The base station search method according to claim 1, wherein:
the radio terminal is a dual terminal that is capable of connecting to a portable telephone network and also of connecting to a fixed telephone network by utilizing a wireless LAN;
the base station search is a search for an access point of the wireless LAN; and
the detection of the predetermined change of state is detection of a deterioration in a reception strength of an electric field of the portable telephone network.

7. A radio terminal, including:
a base station search execution unit adapted to execute a base station search during which the radio terminal returns to a communication zone after the radio terminal moves to outside a communication zone;
a timer (2);
an application controller (1) adapted to perform control to sequentially extend an interval of the base station search by the base station search execution unit from an initial interval by setting the timer (2); and
a detection unit adapted to detect that there is a predetermined change of state in the radio terminal;
**characterized in that**
when the predetermined change of state is detected during execution of the base station search, the application controller (1) is adapted to reset the timer (2) to return the interval of the base station search to the initial interval, and to resume the base station search; and
when the predetermined change of state is detected again before a predetermined time elapses from the time of resetting the timer (2) due to a detection of the predetermined change of state, the application controller (1) is adapted to continue the base station search without resetting the timer (2).

8. The radio terminal according to claim 7, wherein the radio terminal is a dual terminal that is adapted to connect to a portable telephone network and also adapted to connect to a fixed telephone network by utilizing a wireless LAN.

9. The radio terminal according to claim 8, wherein the base station search execution unit is a wireless LAN chip (10) adapted to perform a search for an access point of the wireless LAN in the base station search.

10. The radio terminal according to claim 9, wherein the detection unit is a key input monitoring unit (8) adapted to detect a key input operation of the radio terminal as the predetermined change of state.

11. The radio terminal according to claim 9, wherein the detection unit is a charging state monitoring unit (6) adapted to detect an electrical charging commencement operation of the radio terminal as the predetermined change of state.

12. The radio terminal according to claim 9, wherein:
the radio terminal is a folding-type terminal that can open and close; and the detection unit is an open/closed state monitoring unit (7) adapted to detect an operation that opens the radio terminal as the predetermined change of state.

13. The radio terminal according to claim 9, wherein the detection unit is an RFID chip (9) adapted to perform RFID communication and also adapted to detect RFID communication performed by the RFID chip (9) as the predetermined change of state.

14. The radio terminal according to claim 9, wherein the detection unit is a wireless LAN controller (5) adapted to detect deterioration in the reception strength of an electric field of the portable telephone network as the predetermined change of state.

## Patentansprüche

1. Basisstationssuchverfahren mittels eines Funkendgerät, das eine stromsparende Außerzonen-Basisstationssuchsteuerfunktion umfasst, die durch Einstellen eines Zeitgebers (2) ein Intervall einer Basisstationssuche sequentiell verlängert, während dessen das Funkendgerät in eine Kommunikationszone zurückkehrt, nachdem es sich aus einem anfänglichen Intervall außerhalb einer Kommunikationszone bewegt hat, **dadurch gekennzeichnet, dass**
während der Ausführung der Basisstationssuche, wenn eine vorbestimmte Zustandsänderung in dem Funkendgerät erkannt wird, der Zeitgeber (2) zurückgesetzt wird, das Intervall der Basisstationssuche auf das anfängliche Intervall zurückkehrt und die Basisstationssuche wieder aufgenommen wird; und,
wenn die vorbestimmte Zustandsänderung aufgrund einer Erkennung der vorbestimmten Zustandsänderung wieder erkannt wird, bevor eine vorbestimmte Zeit von der Zeit des Zurücksetzens des Zeitgebers (2) abläuft, die Basisstationssuche fortgesetzt wird, ohne den Zeitgeber (2) zurückzusetzen.

2. Basisstationssuchverfahren nach Anspruch 1, wobei:
das Funkendgerät ein duales Endgerät ist, das in der Lage ist, sich mit einem Mobiltelefonnetz zu verbinden und sich durch Verwendung eines Funk-LAN auch mit einem Telefonfestnetz zu verbinden;
die Basisstationssuche eine Suche nach einem Zugangspunkt des Funk-LAN ist; und
die Erkennung der vorbestimmten Zustandsänderung eine Erkennung eines Tasteneingabevorgangs des Funkendgeräts ist.

3. Basisstationssuchverfahren nach Anspruch 1, wobei:
das Funkendgerät ein duales Endgerät ist, das in der Lage ist, sich mit einem Mobiltelefonnetz zu verbinden und sich durch Verwendung eines Funk-LAN auch mit einem Telefonfestnetz zu verbinden;
die Basisstationssuche eine Suche nach einem Zugangspunkt des Funk-LAN ist; und
die Erkennung der vorbestimmten Zustandsänderung eine Erkennung eines elektrischen Ladebeginnvorgangs des Funkendgeräts ist.

4. Basisstationssuchverfahren nach Anspruch 1, wobei:
das Funkendgerät ein duales Endgerät ist, das in der Lage ist, sich mit einem Mobiltelefonnetz zu verbinden und sich durch Verwendung eines Funk-LAN auch mit einem Telefonfestnetz zu verbinden, und ein klappbares Gerät ist, das sich öffnen und
schließen lässt;
die Basisstationssuche eine Suche nach einem Zugangspunkt des Funk-LAN ist; und
die Erkennung der vorbestimmten Zustandsänderung eine Erkennung eines Vorgangs ist,
der das Funkendgerät öffnet.

5. Basisstationssuchverfahren nach Anspruch 1, wobei:
das Funkendgerät ein duales Endgerät ist, das in der Lage ist, sich mit einem Mobiltelefonnetz zu verbinden und sich durch Verwendung eines Funk-LAN auch mit einem Telefonfestnetz zu verbinden, und einen RFID-Chip (9) umfasst;
die Basisstationssuche eine Suche nach einem Zugangspunkt des Funk-LAN ist; und
die Erkennung der vorbestimmten Zustandsänderung eine Erkennung einer RFID-Kommunikation ist, die von dem RFID-Chip (9) durchgeführt wird.

6. Basisstationssuchverfahren nach Anspruch 1, wobei:
das Funkendgerät ein duales Endgerät ist, das in der Lage ist, sich mit einem Mobiltelefonnetz zu verbinden und sich durch Verwendung eines Funk-LAN auch mit einem Telefonfestnetz zu verbinden;
die Basisstationssuche eine Suche nach einem Zugangspunkt des Funk-LAN ist; und
die Erkennung der vorbestimmten Zustandsänderung eine Erkennung einer Verschlechterung der Empfangsstärke eines elektrischen Feldes des Mobiltelefonnetzes ist.

7. Funkendgerät, umfassend:
eine Basisstationssuchausführeinheit, die eingerichtet ist, um eine Basisstationssuche auszuführen, während derer das Funkendgerät in eine Kommunikationszone zurückkehrt,
nachdem sich das Funkendgerät aus einer Kommunikationszone heraus bewegt hat;
einen Zeitgeber (2);
eine Anwendungssteuerung (1), die eingerichtet ist, um eine Steuerung durchzuführen, um ein Intervall der Basisstationssuche durch die Basisstationssuchausführeinheit von einem anfänglichen Intervall durch Einstellen des Zeitgebers (2) sequentiell zu verlängern; und
eine Erkennungseinheit, die eingerichtet ist, um zu erkennen, dass es in dem Funkendgerät eine vorbestimmte Zustandsänderung gibt;
**dadurch gekennzeichnet, dass**,
wenn während der Ausführung der Basisstationssuche die vorbestimmte Zustandsänderung in dem Funkendgerät erkannt wird, die Anwendungssteuerung (1) eingerichtet ist, um den Zeitgeber (2) zurückzusetzen, um das Intervall der Basisstationssuche auf das anfängliche Intervall zurückzusetzen, und die Basisstationssuche wieder aufzunehmen; und,
wenn die vorbestimmte Zustandsänderung aufgrund einer Erkennung der vorbestimmten Zustandsänderung wieder erkannt wird, bevor eine vorbestimmte Zeit von der Zeit des Zurücksetzens des Zeitgebers (2) abläuft, die Anwendungssteuerung (1) eingerichtet ist, um die Basisstationssuche fortzusetzen, ohne den Zeitgeber (2) zurückzusetzen.

8. Funkendgerät nach Anspruch 7, wobei das Funkendgerät ein duales Endgerät ist, das eingerichtet ist, um sich mit einem Mobiltelefonnetz zu verbinden, und auch eingerichtet ist, um sich durch Verwendung eines Funk-LAN mit einem Telefonfestnetz zu verbinden.

9. Funkendgerät nach Anspruch 8, wobei die Basisstationssuchausführeinheit ein Funk-LAN-Chip (10) ist, der eingerichtet ist, um in der Basisstationssuche eine Suche nach einem Zugangspunkt des Funk-LAN ausführen.

10. Funkendgerät nach Anspruch 9, wobei die Erkennungseinheit eine Tasteneingabeüberwachungseinheit (8) ist, die eingerichtet ist, um einen Tasteneingabevorgang des Funkendgeräts als vorbestimmte Zustandsänderung zu erkennen.

11. Funkendgerät nach Anspruch 9, wobei die Erkennungseinheit eine Ladezustandsüberwachungseinheit (6) ist, die eingerichtet ist, um einen elektrischen Ladebeginnvorgang des Funkendgeräts als vorbestimmte Zustandsänderung zu erkennen.

12. Funkendgerät nach Anspruch 9, wobei
das Funkendgerät ein klappbares Gerät ist, das sich öffnen und schließen lässt; und die Erkennungseinheit eine Einheit (7) zum Überwachen des offenen/geschlossenen Zustands ist, die eingerichtet ist, um einen Vorgang zu erkennen, der als vorbestimmte Zustandsänderung das Funkendgerät öffnet.

13. Funkendgerät nach Anspruch 9, wobei die Erkennungseinheit ein RFID-Chip (9) ist, der eingerichtet ist, um eine RFID-Kommunikation durchzuführen, und auch eingerichtet ist, um eine von dem RFID-Chip (9) durchgeführte RFID-Kommunikation als vorbestimmte Zustandsänderung zu erkennen.

14. Funkendgerät nach Anspruch 9, wobei die Erkennungseinheit eine Funk-LAN-Steuerung (5) ist, die eingerichtet ist, um eine Verschlechterung der Empfangsstärke eines elektrischen Feldes des Mobiltelefonnetzes als vorbestimmte Zustandsänderung zu erkennen.

## Revendications

1. Procédé de recherche de station de base au moyen d'un terminal radio qui comprend une fonction de commande de recherche de station de base à économie d'énergie hors zone qui, en réglant une minuterie (2), étend séquentiellement un intervalle d'une recherche de station de base au cours duquel le terminal radio revient dans une zone de communication après être sorti d'une zone de communication à partir d'un intervalle initial,
**caractérisé en ce que**
au cours de l'exécution de la recherche de station de base, lorsqu'un changement d'état prédéterminé est détecté dans le terminal radio, la minuterie (2) est réinitialisée, l'intervalle de la recherche de station de base est remis à l'intervalle initial, et la recherche de station de base est reprise ; et
lorsque le changement d'état prédéterminé est détecté à nouveau avant l'expiration d'un temps prédéterminé à partir du temps de réinitialisation de la minuterie (2) en raison de la détection du changement d'état prédéterminé, la recherche de station de base se poursuit sans réinitialiser la minuterie (2).

2. Procédé de recherche de station de base selon la revendication 1, dans lequel :
le terminal radio est un terminal double qui est capable de se connecter à un réseau de téléphone portable et également de se connecter à un réseau de téléphone fixe en utilisant un réseau local, LAN, sans fil ;
la recherche de station de base est une recherche d'un point d'accès du LAN sans fil ; et
la détection du changement d'état prédéterminé est une détection d'une opération d'entrée de touche du terminal radio.

3. Procédé de recherche de station de base selon la revendication 1, dans lequel :
le terminal radio est un terminal double qui est capable de se connecter à un réseau de téléphone portable et également de se connecter à un réseau de téléphone fixe en utilisant un LAN sans fil ;
la recherche de station de base est une recherche d'un point d'accès du LAN sans fil ; et
la détection du changement d'état prédéterminé est une détection d'une opération de commencement de chargement électrique du terminal radio.

4. Procédé de recherche de station de base selon la revendication 1, dans lequel :
le terminal radio est un terminal double qui est capable de se connecter à un réseau de téléphone portable et également de se connecter à un réseau de téléphone fixe en utilisant un LAN sans fil, et il est d'un type repliable qui peut s'ouvrir et se fermer ;
la recherche de station de base est une recherche d'un point d'accès du LAN sans fil ; et
la détection du changement d'état prédéterminé est une détection d'une opération qui ouvre le terminal radio.

5. Procédé de recherche de station de base selon la revendication 1, dans lequel :
le terminal radio est un terminal double qui est capable de se connecter à un réseau de téléphone portable et également de se connecter à un réseau de téléphone fixe en utilisant un LAN sans fil, et comprend une puce RFID (9) ;
la recherche de station de base est une recherche d'un point d'accès du LAN sans fil ; et
la détection du changement d'état prédéterminé est une détection d'une communication RFID effectuée par la puce RFID (9).

6. Procédé de recherche de station de base selon la revendication 1, dans lequel :
le terminal radio est un terminal double qui est capable de se connecter à un réseau de téléphone portable et également de se connecter à un réseau de téléphone fixe en utilisant un LAN sans fil ;
la recherche de station de base est une recherche d'un point d'accès du LAN sans fil ; et
la détection du changement d'état prédéterminé est une détection d'une détérioration d'une force de réception d'un champ électrique du réseau de téléphone portable.

7. Terminal radio, comprenant :
une unité d'exécution de recherche de station de base apte à exécuter une recherche de station de base au cours de laquelle le terminal radio revient dans une zone de communication après être sorti d'une zone de communication ;
une minuterie (2) ;
un organe de commande d'application (1) apte à effectuer une commande pour étendre séquentiellement un intervalle de la recherche de station de base par l'unité d'exécution de recherche de station de base à partir d'un intervalle initial en réglant la minuterie (2) ; et
une unité de détection apte à détecter s'il y a un changement d'état prédéterminé dans le terminal radio ;
**caractérisé en ce que**
lorsque le changement d'état prédéterminé est détecté au cours d'une exécution de la recherche de station de base, l'organe de commande d'application (1) est apte à réinitialiser la minuterie (2) pour remettre l'intervalle de la recherche de station de base à l'intervalle initial, et pour reprendre la recherche de station de base ; et
lorsque le changement d'état prédéterminé est détecté à nouveau avant l'expiration d'un temps prédéterminé à partir du temps de réinitialisation de la minuterie (2) en raison d'une détection du changement d'état prédéterminé, l'organe de commande d'application (1) est apte à poursuivre la recherche de station de base sans réinitialiser la minuterie (2).

8. Terminal radio selon la revendication 7, dans lequel le terminal radio est un terminal double qui est apte à se connecter à un réseau de téléphone portable et également à se connecter à un réseau de téléphone fixe en utilisant un réseau local, LAN, sans fil.

9. Terminal radio selon la revendication 8, dans lequel l'unité d'exécution de recherche de station de base est une puce LAN sans fil (10) apte à effectuer une recherche d'un point d'accès du LAN sans fil dans la recherche de station de base.

10. Terminal radio selon la revendication 9, dans lequel l'unité de détection est une unité de surveillance d'entrée de touche (8) apte à détecter une opération d'entrée de touche du terminal radio en tant que changement d'état prédéterminé.

11. Terminal radio selon la revendication 9, dans lequel l'unité de détection est une unité de surveillance d'état de chargement (6) apte à détecter une opération de commencement de chargement électrique du terminal radio en tant que changement d'état prédéterminé.

12. Terminal radio selon la revendication 9, dans lequel :
le terminal radio est un terminal d'un type repliable qui peut s'ouvrir et se fermer ; et l'unité de détection est une unité de surveillance d'état ouvert/fermé (7) apte à détecter une opération qui ouvre le terminal radio en tant que changement d'état prédéterminé.

13. Terminal radio selon la revendication 9, dans lequel l'unité de détection est une puce RFID (9) apte à effectuer une communication RFID et également apte à détecter une communication RFID effectuée par la puce RFID (9) en tant que changement d'état prédéterminé.

14. Terminal radio selon la revendication 9, dans lequel l'unité de détection est un organe de commande LAN sans fil (5) apte à détecter une détérioration de la force de réception d'un champ électrique du réseau de téléphone portable en tant que changement d'état prédéterminé.
